(19) Europäisches Patentamt

European Patent Office

Office européen des brevets

(11) **EP 1 096 473 A2**

(12) **EUROPEAN PATENT APPLICATION**

(43) Date of publication:
02.05.2001 Bulletin 2001/18

(51) Int. Cl.⁷: **G10L 17/00**

(21) Application number: **00122381.7**

(22) Date of filing: **25.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.10.1999 US 427025**

(71) Applicant:
**Persay Inc.,
c/o Corporation Service Company
Wilmington DE 19805 (US)**

(72) Inventors:
• **Toledo-Ronen, Orith
Tel Aviv (IL)**
• **Shimoni, Guy
Zichron Yaakov 30900 (IL)**

(74) Representative:
**VOSSIUS & PARTNER
Siebertstrasse 4
81675 München (DE)**

(54) **Background model clustering for speaker identification and verification**

(57) The target likelihood score of an unknown speaker measures the degree to which the input speech of the unknown speaker matches the model of a target speaker. A method for normalizing the target likelihood score includes the step of selecting one of a plurality of background models as a selected background model. The method also includes the steps of measuring the degree to which the input speech matches the selected background model, thus producing a background likelihood score, and dividing the target likelihood score by the background likelihood score. The background models are trained from sessions of speech segments, the sessions grouped according to characteristics of the speech segments. A method for clustering sessions of speech segments from a plurality of speakers into $N$ clusters includes the steps of a) randomly selecting $N$ of the sessions and assigning each of the $N$ sessions to a corresponding one of the $N$ clusters; b) for each session $I$, finding a particular cluster of the $N$ clusters that minimizes the average of distances between the session $I$ and all sessions in the particular cluster and assigning the session $I$ to the particular cluster; and c) repeating step b) until none of the sessions changes its cluster.

FIG. 1

EP 1 096 473 A2

## Description

### FIELD OF THE INVENTION

The present invention relates to speaker identification and verification, in general, and to background models for speaker identification and verification, in particular.

### BACKGROUND OF THE INVENTION

Speaker identification and verification are the tasks of determining the identity of a speaker using only samples of the speaker's voice. Speaker identification is the task of identifying a speaker from within a pre-defined set of members. In "closed-set" identification, the input speech can come from any of the members in the set, but cannot come from anyone else. In "open-set" identification, the input speech can come from any of the members in the set, or can come from someone who is not a member of the set (an "impostor").

Speaker verification is a special case of "open-set" identification. In speaker verification, the algorithm must decide whether the input voice of the speaker matches a single claimed identity (the "target" speaker), or whether this input voice belongs to an impostor.

Before performing identification, speech data should be collected from the members in the set, and a model describing each member's voice should be trained. During identification, the input speech is tested against the member's models, and a likelihood score for each model is obtained.

The likelihood score measures the degree to which the input speech matches the member's model. In "open-set" identification, the speakers likelihood score by itself is not sufficient, since the input speech may also come from an unknown person. In that case, the speaker's likelihood score is compared with a background model score.

The background model score measures the degree of match between the input speech and a speaker-independent model that is not specific to the target speaker. The background model is trained from a collection of speech segments from speakers who are not target speakers. The speech segments are collected from a large group of speakers during the initial stage of system calibration and training. The data for building the background model comes from a large number of different speakers, each speaker contributing a small amount of data, known as a session.

The comparison of the speaker's likelihood score to the background model score is performed by computing the ratio between those scores. This ratio is effectively a normalized speaker's likelihood score. Speaker-independent background models are defined in Douglas A. Reynolds, "Comparison of Background Normalization Methods for Text-Independent Speaker Verification", Proceedings of Eurospeech '97, Rhodes, Greece, pp.963 - 966. The normalized speaker's likelihood score is compared with a threshold for making a decision about the identity of the speaker. Score normalization is necessary for verification and is also important for robustness of "closed-set" identification, as explained in H. Gish and M. Schmidt, "Text Independent Speaker Identification", *IEEE Signal Processing Magazine*, Oct. 1994.

There are situations in which the data in the system for training and verification can arrive via various communication channels, for example fixed telephones, cellular telephones, and "hands-free" car telephones. A person may use a fixed telephone for some of his calls to the system and a cellular telephone for other calls. The cellular telephone may be used in a quiet office environment for some calls and in a noisy driving environment for other calls. In these cases, the mismatch between the training and testing conditions, and the variability of the data in terms of communication channel effect and noise level, can degrade the identification.

### SUMMARY OF THE INVENTION

There is provided in accordance with a preferred embodiment of the present invention a method for normalizing a target likelihood score of an unknown speaker, the target likelihood score measuring the degree to which the input speech of the unknown speaker matches the model of a target speaker. The method includes the steps of selecting one of a plurality of background models as a selected background model, measuring the degree to which the input speech matches the selected background model, thus producing a background likelihood score, and dividing the target likelihood score by the background likelihood score.

In accordance with a preferred embodiment of the present invention, the background models are trained from sessions of speech segments, the sessions grouped according to characteristics of the speech segments.

Moreover, in accordance with a preferred embodiment of the present invention, the characteristics include at least one of the group comprising: the gender of the people who produced the speech segments, the channels through which the speech segments were recorded, and the noise levels of the speech segments.

Furthermore, in accordance with a preferred embodiment of the present invention, the selected background model is the one whose distance from the input speech is minimal.

Alternatively, in accordance with a preferred embodiment of the present invention, the selected background model is the one whose distance from the model of the target speaker is minimal.

Additionally, in accordance with a preferred embodiment of the present invention, the step of selecting includes the steps of measuring the degree to which the model of the target speaker matches each of the plurality of background models, and selecting one of the plurality of background models that best matches the model of the target speaker.

There is also provided in accordance with a preferred embodiment of the present invention a method for normalizing a target likelihood score of an unknown speaker. The target likelihood score measures the degree to which the input speech of the unknown speaker matches the model of a target speaker. The method includes the step of measuring the degree to which the input speech matches each of a plurality of background models, thus producing a corresponding plurality of background likelihood scores. The method also includes the steps of selecting one of the plurality of background models that best matches the input speech as a selected background model, and dividing the target likelihood score by the background likelihood score of the selected background model.

In accordance with a preferred embodiment of the present invention, the background models are trained from sessions of speech segments, the sessions grouped according to characteristics of the speech segments.

Moreover, in accordance with a preferred embodiment of the present invention, the characteristics include at least one of the group comprising: the gender of the people who produced the speech segments, the channels through which the speech segments were recorded, and the noise levels of the speech segments.

There is also provided in accordance with a preferred embodiment of the present invention a method for clustering sessions of speech segments from a plurality of speakers into $N$ clusters. The method includes the steps of

a) randomly selecting $N$ of the sessions and assigning each of the $N$ sessions to a corresponding one of the $N$ clusters;

b) for each session $I$, finding a particular duster of the $N$ clusters that minimizes the average of distances between the session $I$ and all sessions in the cluster and assigning the session $I$ to the particular cluster, and

c) repeating step b) until none of the sessions changes its cluster.

## BRIEF DESCRIPTION OF THE DRAWINGS

The present invention will be understood and appreciated more fully from the following detailed description taken in conjunction with the appended drawings in which:

Fig. 1 is a schematic illustration of an exemplary division of background data into subgroups, according to a preferred embodiment of the present invention; and

Fig. 2 is a flowchart illustration of an unsupervised clustering method, according to a preferred embodiment of the present invention.

## DETAILED DESCRIPTION OF THE PRESENT INVENTION

The present invention is directed towards a method for clustering of background model data. The clustering partially solves the mismatch problem by reducing variability in the model used for normalizing the speaker's score. The present invention is also directed towards an unsupervised clustering method that is useful in the case that no information about the incoming calls exists.

When the training data and the testing data of the target speaker are similar in terms of communication channel and background noise level, a single background model is sufficient for score normalization. Problems arise when the speech is noisy, when there is a mismatch between the communication channel used during training and that used during testing, and when the background model is based on speech recorded through various communication channels.

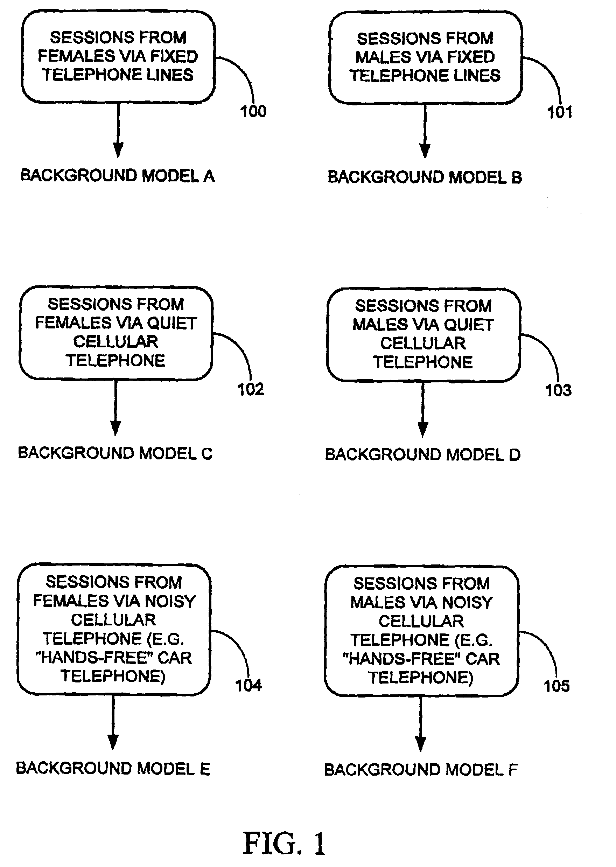

Reference is now made to Fig. 1, which is a schematic illustration of an exemplary division of background data into subgroups, according to a preferred embodiment of the present invention. The sessions of background data are grouped according to communication channel, the gender of the speaker, or any other major effect that appears in the recorded audio samples. In the present example, subgroups 100, 102, and 104 have sessions from female speakers and subgroups 101, 103, and 105 have sessions from male speakers. Subgroups 100 and 101 have sessions from fixed telephone lines, subgroups 102 and 103 have sessions from quiet cellular telephone conversations, and subgroups 104 and 105 have sessions from noisy cellular telephone conversations. A separate background model A, B, C, D, E and F is produced from each of the subgroups 100, 101, 102, 103, 104 and 105, respectively. During testing, the background model with similar characteristics to either the target speakers model or the speaker's test audio segment is used for normalizing the speaker's score.

However, this approach cannot be used if the information about the communication channel or the speaker's gender is unavailable. The present invention provides an unsupervised clustering method that does not require any information about the communication channel or the speaker's gender.

An inter-speaker distance measure for the purpose of selecting speakers in speaker-dependent background models is described in Douglas A. Reynolds, "Comparison of Background Normalization Methods for Text-Independent Speaker Verification", Proceedings of Eurospeech '97, Rhodes, Greece, pp.963 - 966 and in Douglas A. Reynolds, "Speaker Identification and Verification Using Gaussian Mixture Speaker Models", Speech Communication, vol. 17, pp. 91 - 108, August 1995. According to a preferred embodiment of the present invention, this measure is used for a different purpose, which is to cluster speaker-independent background model data. The result of the unsupervised clustering method is a set of *N* background models, each model is based on audio segments with similar characteristics.

The clustering can be performed hierarchically, where each of the *N* clusters is further clustered into *M* clusters, resulting in a set of *NxM* background models, and so on. According to a preferred embodiment of the present invention, an initial clustering into two clusters separates calls from many speakers into groups of same gender speakers. An additional step of clustering further separates the calls into groups with similar communication channels.

The set of background models obtained after clustering can be used for speaker identification in several ways. Normalization of the speaker's score can be performed, for example, with the background model that best matches the speaker's test audio segment, or with the background model that best matches the target speaker's model.

The selection of the background model for normalizing the speaker's score is based on the same distance measure used for clustering the sessions within each background model. The selection may be based on the distance between each background model and the target speaker's model, or may be based on the distance between each background model and the speaker's test audio segment. Alternatively, the selection is based on the likelihood score of the target speaker's sessions or the speaker's test audio segment with respect to each cluster.

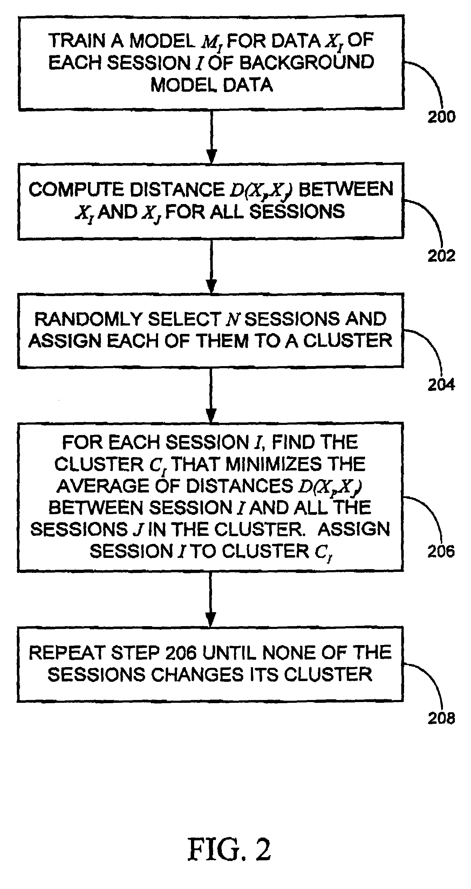

Reference is now made to Fig. 2, which is a flowchart illustration of an unsupervised clustering method, according to a preferred embodiment of the present invention. Train a model $M_I$ for data $X_I$ of each session *I* of the background model data (step 200). Compute the distance $D(X_I, X_J)$ between $X_I$ and $X_J$ for all sessions (step 202). The inter-speaker distance measure described in the references mentioned hereinabove is given by:

$$D(X_I, X_J) = \log(p(X_I|M_I)/p(X_I|M_J)) + \log(p(X_J|M_J)/p(X_J|M_I))$$

where $p(X_I|M_J)$ is the likelihood score of $X_I$ with respect to the model $M_J$.

Randomly select *N* sessions and assign each of them to a cluster (step 204). For each session *I*, find the cluster $C_I$ that minimizes the average of distances $D(X_I, X_J)$ between session *I* and all the sessions *J* in the cluster (step 206). Assign session *I* to cluster $C_I$ (step 206). Repeat step 206 until none of the sessions changes its cluster (step 208).

It will be appreciated by persons skilled in the art that the present invention is not limited by what has been particularly shown and described herein above. Rather the scope of the invention is defined by the claims that follow:

**Claims**

1. A method for normalizing a target likelihood score of an unknown speaker, the target likelihood score measuring the degree to which the input speech of the unknown speaker matches the model of a target speaker, the method comprising the steps of:

   selecting one of a plurality of background models as a selected background model;
   measuring the degree to which the input speech matches said selected background model, thereby producing a background likelihood score; and
   dividing the target likelihood score by said background likelihood score.

2. A method according to claim 1, wherein said background models are trained from sessions of speech segments, said sessions grouped according to characteristics of said speech segments.

3. A method according to claim 2, wherein said characteristics include at least one of the group comprising: the gender of the people who produced said speech segments, the channels through which said speech segments were recorded, and the noise levels of said speech segments.

4. A method according to claim 1, 2 or 3, wherein said step of selecting comprises the step of:

   selecting the one of said plurality of background models whose distance from the input speech is minimal.

**5.** A method according to claim 1, 2 or 3, wherein said step of selecting comprises the step of:

selecting the one of said plurality of background models whose distance from the model of the target speaker is minimal.

**6.** A method according to claim 1, 2 or 3, wherein said step of selecting comprises the step of:

measuring the degree to which the model of the target speaker matches each of said plurality of background models; and
selecting one of said plurality of background models that best matches the model of the target speaker.

**7.** A method for normalizing a target likelihood score of an unknown speaker, the target likelihood score measuring the degree to which the input speech of the unknown speaker matches the model of a target speaker, the method comprising the steps of:

measuring the degree to which the input speech matches each of a plurality of background models, thereby producing a corresponding plurality of background likelihood scores;
selecting one of said plurality of background models that best matches the input speech as a selected background model; and
dividing the target likelihood score by the background likelihood score of said selected background model.

**8.** A method according to claim 7, wherein said background models are trained from speech segments grouped according to characteristics of said speech segments.

**9.** A method according to claim 8, wherein said characteristics include at least one of the group comprising: the gender of the people who produced said speech segments, the channels through which said speech segments were recorded, and the noise levels of said speech segments.

**10.** A method for clustering sessions of speech segments from a plurality of speakers into $N$ clusters, the method comprising the steps of:

a) randomly selecting $N$ of the sessions and assigning each of said $N$ sessions to a corresponding one of the $N$ clusters;
b) for each session $I$, finding a particular cluster of the $N$ clusters that minimizes the average of distances between said session $I$ and all sessions in said particular cluster and assigning said session $I$ to said particular cluster; and
c) repeating step b) until none of the sessions changes its cluster.

SESSIONS FROM
FEMALES VIA FIXED
TELEPHONE LINES

100

↓

BACKGROUND MODEL A

SESSIONS FROM
MALES VIA FIXED
TELEPHONE LINES

101

↓

BACKGROUND MODEL B

SESSIONS FROM
FEMALES VIA QUIET
CELLULAR
TELEPHONE

102

↓

BACKGROUND MODEL C

SESSIONS FROM
MALES VIA QUIET
CELLULAR
TELEPHONE

103

↓

BACKGROUND MODEL D

SESSIONS FROM
FEMALES VIA NOISY
CELLULAR
TELEPHONE (E.G.
"HANDS-FREE" CAR
TELEPHONE)

104

↓

BACKGROUND MODEL E

SESSIONS FROM
MALES VIA NOISY
CELLULAR
TELEPHONE (E.G.
"HANDS-FREE" CAR
TELEPHONE)

105

↓

BACKGROUND MODEL F

FIG. 1

TRAIN A MODEL $M_I$ FOR DATA $X_I$ OF EACH SESSION $I$ OF BACKGROUND MODEL DATA — 200

COMPUTE DISTANCE $D(X_I,X_J)$ BETWEEN $X_I$ AND $X_J$ FOR ALL SESSIONS — 202

RANDOMLY SELECT $N$ SESSIONS AND ASSIGN EACH OF THEM TO A CLUSTER — 204

FOR EACH SESSION $I$, FIND THE CLUSTER $C_I$ THAT MINIMIZES THE AVERAGE OF DISTANCES $D(X_I,X_J)$ BETWEEN SESSION $I$ AND ALL THE SESSIONS $J$ IN THE CLUSTER. ASSIGN SESSION $I$ TO CLUSTER $C_I$ — 206

REPEAT STEP 206 UNTIL NONE OF THE SESSIONS CHANGES ITS CLUSTER — 208

FIG. 2